(19) Europäisches Patentamt

European Patent Office

Office européen des brevets

(11) **EP 1 050 987 B1**

(12) **FASCICULE DE BREVET EUROPEEN**

(45) Date de publication et mention
de la délivrance du brevet:
**31.10.2001 Bulletin 2001/44**

(51) Int Cl.7: **H04J 11/00**, H04B 1/707

(21) Numéro de dépôt: **99440085.1**

(22) Date de dépôt: **21.04.1999**

(54) **Procédé d'accès multiple de type CDMA à capacité améliorée**

CDMA-Vielfachzugriffverfahren mit verbesserter Kapazität

CDMA multiple access method with improved capacity

(84) Etats contractants désignés:
**DE ES FR GB IT**

(43) Date de publication de la demande:
**08.11.2000 Bulletin 2000/45**

(73) Titulaire: **ALCATEL**
**75008 Paris (FR)**

(72) Inventeur: **Sari, Hikmet**
**94000 CRETEIL (FR)**

(74) Mandataire: **Lamoureux, Bernard et al**
**COMPAGNIE FINANCIERE ALCATEL**
**Département Propriété Industrielle**
**30, avenue Kléber**
**75116 Paris (FR)**

(56) Documents cités:
**WO-A-96/27250**

• **ZHU J ET AL: "Performance of spread spectrum synchronous access communication system by orthogonal sequences" ELECTRONICS AND COMMUNICATIONS IN JAPAN, PART 1 (COMMUNICATIONS), OCT. 1986, USA, vol. 69, no. 10, pages 75-84, XP002116072 ISSN: 8756-6621**

# Description

La présente invention a pour objet un procédé d'accès multiple de type CDMA (Coded Division Multiple Access, Accès Multiple à Répartition par Codage) à capacité améliorée. En pratique l'invention concerne un procédé de transmission radioélectrique de plusieurs signaux avec une technique d'étalement de spectre. Avec une telle technique, on code chacun des symboles à transmettre par des séquences de bits qui sont des séquences orthogonales, O, de bits, ou avec des séquences aléatoires ou pseudo-aléatoires, PN (pseudo-noise), de bits. En réception, on effectue un décodage qui est fonction du codage. Le but de l'invention est d'augmenter le nombre de messages transmissibles avec une telle méthode, notamment au-delà de sa limite théorique connue,

D'une manière générale, dans le cas d'une transmission d'un signal pour un seul utilisateur, on peut retenir que pour une technique de modulation donnée (modulation d'amplitude, de fréquence, de phase, ou mixte de type QAM ou autre), une occupation spectrale sera de W Hz pour transmettre un débit de R bits. Si N utilisateurs désirent transmettre simultanément de la même façon et avec un même débit R, la bande passante nécessaire sera de N x W. Ce résultat est évidemment vrai en codage de type FDMA (Frequency Division Multiple Access, Accès Multiple à Répartition en Fréquence). Il est également vrai en transmission de type TDMA (Time Division Multiple Access, Accès Multiple à Répartition dans le Temps).

Pour décrire avec plus de précision, et d'une manière comparable, la technique de base de type CDMA, on choisit aussi ici un facteur N comme facteur d'étalement de spectre. La valeur N peut être quelconque, souvent on choisit une puissance de deux. En codage de type CDMA, on code un symbole binaire (+1 ou -1) à transmettre par N bits (+1 ou -1) d'une séquence de codage. Le codage s'apparente ainsi à une multiplication. On s'arrange pour que le symbole ainsi codé N fois, on dit aussi les N chips, soit émis pendant une durée attribuée à un symbole. Il en résulte également une bande passante nécessaire N x W.

Pour un étalement de spectre résultant de cette multiplication, N (et seulement N) séquences orthogonales peuvent être affectées à N utilisateurs. Par principe, grâce à leur orthogonalité, ces séquences n'interfèrent pas entre elles. Au-delà de N utilisateurs, la technique de type CDMA orthogonale est inemployable. On peut notamment déduire de l'orthogonalité des séquences de codage que l'interférence rapportée par le contenu d'un message d'un utilisateur sur le contenu d'un message d'un autre utilisateur est nulle. Ceci se note I/S = 0, expression dans laquelle I représente l'énergie interférente due à des messages différents d'un message à transmettre, et S l'énergie du message à transmettre.

L'article de ZHU J; et al. : « Performance of spread spectrum synchronus access communication system by orthogonal séquences » , ELECTRONICS AND COMMUNICATIONS IN JAPAN, part 1, Oct. 1986, USA, vol. 69, No. 10, pages 75-84 étudie les performances d'un codage de type CDMA par séquences orthogonales.

En codage CDMA, il est cependant possible de coder les symboles des messages à transmettre par des séquences de N bits qui ne sont pas orthogonales, mais qui sont par contre aléatoires, ou pseudo-aléatoires. Dans ce cas, on utilise des séries de bits (+1 -1) aléatoires ou pseudo-aléatoires de préférence très longues (plusieurs millions de bits par exemple). Dans ces séries, on prélève des tronçons successifs et contigus de N bits constituant des séquences de codage. Avec un tel codage aléatoire ou pseudo-aléatoire, un symbole à transmettre est codé par une telle séquence, alors qu'un symbole suivant est codé par une séquence suivante (un tronçon de N bits suivants dans la série des bits aléatoires ou pseudo-aléatoire), et ainsi de suite.

Autant l'interférence est nulle avec des séquences orthogonales de N bits, autant on peut montrer que, les séquences aléatoires ou pseudo-aléatoire n'étant pas orthogonales (au moins pas systématiquement), l'interférence apportée dans chaque message par le canal est de type K/N où K est le nombre d'utilisateurs, le nombre des messages à transmettre. En conséquence d'une dégradation progressive de la qualité de la transmission en fonction du nombre de messages à transmettre simultanément, la transmission de type CDMA PN conduit à une limite bien inférieure à N du nombre de messages simultanés envisageables (pour une séquence de codage de N bits aléatoire ou pseudo-aléatoire), car dans le cas où ce nombre deviendrait égal à N, le rapport K/N deviendrait égal à 1 : le bruit d'interférence aurait autant de puissance que le signal utile.

Une transmission de type CDMA PN est notamment décrite dans le document WO-A-96 27 250.

Or les besoins de débits de transmission sont toujours croissants, et donc la saturation des canaux de transmission est un problème couramment rencontré.

L'invention permet de remédier au problème constitué par cette limite de N messages transmissibles si les séquences de codages ont des longueurs de N bits. Selon l'invention pour N premiers messages, on utilise des séquences de codages de N bits qui sont orthogonales. Ceci est facile si le nombre des messages est inférieur ou égal à N. Pour des messages supplémentaires, on utilise des séquences de codage aléatoires ou pseudo-aléatoires PN qui interfèrent entre elles d'une part et avec les séquences orthogonales d'autre part. Pour la réception, on procède alors de préférence par étapes. On sépare les signaux des messages codés avec des séquences orthogonales O et ceux codés avec des séquences PN. Cette séparation est réalisée par un décodage séparé. La technique d'accès multiple proposée permet ainsi d'accommoder N utilisateurs sans aucune interférence mutuelle, ou bien un nombre supérieur d'utilisateurs au prix d'une petite dégradation du rapport signal à bruit. Cependant, comme on le montrera dans la suite de la description, les effets de ce bruit peuvent être neutralisés par les procédés déjà utilisés de codage de canal prévoyant une redondance de transmission. Tout se passe alors comme si M utilisateurs pouvaient utiliser ensemble un canal théoriquement limité à N utilisateurs, avec M plus grand que N (dans un exemple M peut être de l'ordre de N plus 25% de N).

L'invention a donc pour objet un procédé d'accès multiple de type CDMA, pour transmettre plusieurs messages contenant chacun une suite de symboles dans lequel

- on code chaque symbole à transmettre par une séquence de N bits pour obtenir pour chaque symbole une séquence de N contributions dites chips,
- on combine les chips des différents messages pour obtenir un signal transmis,
- on reçoit le signal transmis,

  　caractérisé en ce que

- si N symboles au plus sont transmis simultanément, on choisit pour les séquences de bits utilisées des séquences orthogonales, et
- si M symboles sont transmis simultanément avec M plus grand que N, on choisit pour N symboles N séquences orthogonales de N bits, et pour M-N symboles supplémentaires restants des séquences de N bits aléatoires ou pseudo-aléatoires,
- une séquence de N bits étant aléatoire ou pseudo-aléatoire si pour des symboles suivant à transmettre d'un même message ces séquences de N bits ne se reproduisent qu'avec une période plus grande que N.

Pour la réception, le procédé de l'invention est caractérisé en ce que, suite à la réception du signal transmis, on exécute les étapes suivantes

- a) on décode le signal transmis reçu par les N séquences orthogonales et on obtient N signaux décodés quantifiés, on détecte les N signaux décodés quantifiés et on obtient N estimations de symboles des N messages,
- b) on décode le signal transmis reçu par les M-N séquences aléatoires ou pseudo-aléatoires supplémentaires et on obtient M-N signaux supplémentaires décodés quantifiés,
- c) on soustrait de chacun des M-N signaux supplémentaires décodés quantifiés une interférence synthétisée à partir des N estimations des symboles des N messages, on détecte les résultats de ces soustractions et on obtient M-N estimations supplémentaires de symboles des M-N messages.

L'invention sera mieux comprise à la lecture de la description qui suit et à l'examen des figures qui l'accompagnent. Celles-ci ne sont présentées qu'à titre indicatif et nullement limitatif de l'invention. Les figures montrent:

- Figure 1 : une représentation synthétique du procédé de l'invention ;
- Figure 2 : une illustration d'une première technique de détection ;
- Figure 3 : une généralisation de la première technique.

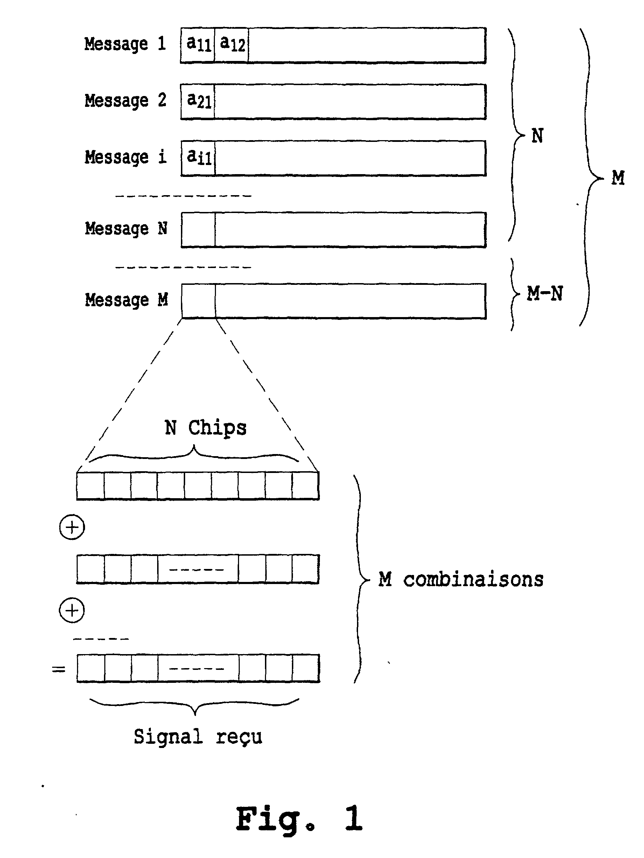

La figure 1 montre le traitement subi selon l'invention par des symboles de M messages reçus simultanément dans un récepteur. Selon l'invention, on considère un système CDMA avec un facteur d'étalement égal à N, c'est-à-dire avec un nombre de chips par symbole égal à N (N est inférieur à M). Il existe deux classes de codage CDMA : le CDMA orthogonal qu'on peut désigner par O-CDMA, et le codage CDMA utilisant des séquences pseudo-aléatoires qu'on peut désigner par PN-CDMA. Dans le codage O-CDMA, les séquences d'étalement étant orthogonales il n'y a aucune interférence mutuelle entre les utilisateurs. Mais, avec un facteur d'étalement de N, le nombre de séquences sera limité à N. Dans le codage PN-CDMA, le nombre de séquences est quasiment illimité, mais il y a une interférence mutuelle dès qu'il y a deux utilisateurs sur le même canal. Ce n'est donc pas le nombre de séquences qui limite le nombre d'utilisateurs, mais l'interférence qui croît linéairement avec le nombre d'utilisateurs. Plus précisément l'interférence entre deux utilisateurs avec des séquences PN-CDMA et avec un facteur d'étalement N est de puissance $1/N$ si la puissance du signal est normalisée à 1. Avec N utilisateurs, le niveau de l'interférence serait donc aussi fort que celui du signal, ce qui est clairement prohibitif.

Dans l'invention, on combine les avantages respectifs des séquences orthogonales O et des séquences PN. Selon l'invention, jusqu'à N utilisateurs sur le canal, on utilise uniquement des séquences orthogonales O pour éviter toute interférence entre utilisateurs. Au-delà de ce nombre N, on utilise des séquences PN (séquences de longueur la plus grande possible, séquences de GOLD, séquences de KASAMI ou tout autre type de séquences pseudo-aléatoires) pour accommoder des utilisateurs supplémentaires.

Par la suite, $W_1$, $W_2$, ...., $W_N$ désignent les N séquences orthogonales (séquences de WALSH-HADAMARD) de longueur N. On peut écrire:

$$W_1=(w_{1,1}, w_{1,2},....., w_{1N})$$

$$W_2=(w_{2,1}, w_{2,2},....., w_{2N}) \qquad (1)$$

$$W_N = (w_{N1}, w_{N,2}, \ldots, w_{N,N})$$

Autrement dit, $w_{i,j}$ désigne le $j^{\text{ième}}$ bit de codage de la séquence $W_i$. Si on code un symbole $a_{i1}$ d'un message Message i par cette séquence $W_i$ on obtiendra des chips. Dans un émetteur, par exemple celui d'un téléphone mobile, on module une porteuse par ces chips selon une technique de modulation (par exemple de type QAM pour fixer les idées, mais n'importe quelle autre type de modulation est envisageable). La porteuse ainsi modulée est émise radioélectriquement et l'excitation radioélectrique émise se propage jusqu'à une station de base d'un réseau de stations de base. Dans un système de type CDMA, les différents émetteurs, donc ici les différents téléphones mobiles, sont commandés par la station de base de telle façon que tous les chips de même rang arrivent en même temps à cette station de base. De cette façon les chips de modulation reçus pour les différents messages se combinent (par addition) entre eux. On appelle signal reçu le résultat de ces combinaisons de chips tels qu'ils sont reçus par la station de base. On peut réaliser un tel codage jusqu'à ce que le nombre des messages à transmettre devienne égal à N.

Selon l'invention $P_1$, $P_2$,.... désignent les séquences PN qu'on utilise lorsque les N séquences orthogonales ont déjà été utilisées. Comme précédemment écrit, on constitue des séquences de N bits de codage :

$$P_1 = (p_{1,1}, p_{1,2}, \ldots, p_{1,N})$$

$$P_2 = (p_{2,1}, p_{2,2}, \ldots, p_{2,N}) \qquad (2)$$

etc.......

On notera ici que les séquences orthogonales se répètent d'un symbole $a_{11}$ à un autre $a_{12}$, car la longueur de la séquence de codage est identique à la longueur du symbole. Par contre, les séquences PN sont non corrélées entre elles pour deux symboles successifs. La raison est que les séquences données par l'expression (2) sont des portions de longueur N de séquences très longues dont deux portions successives sont par conséquent non corrélées. Toutefois, pour simplifier la description, on élimine l'indice temps dans l'expression (2).

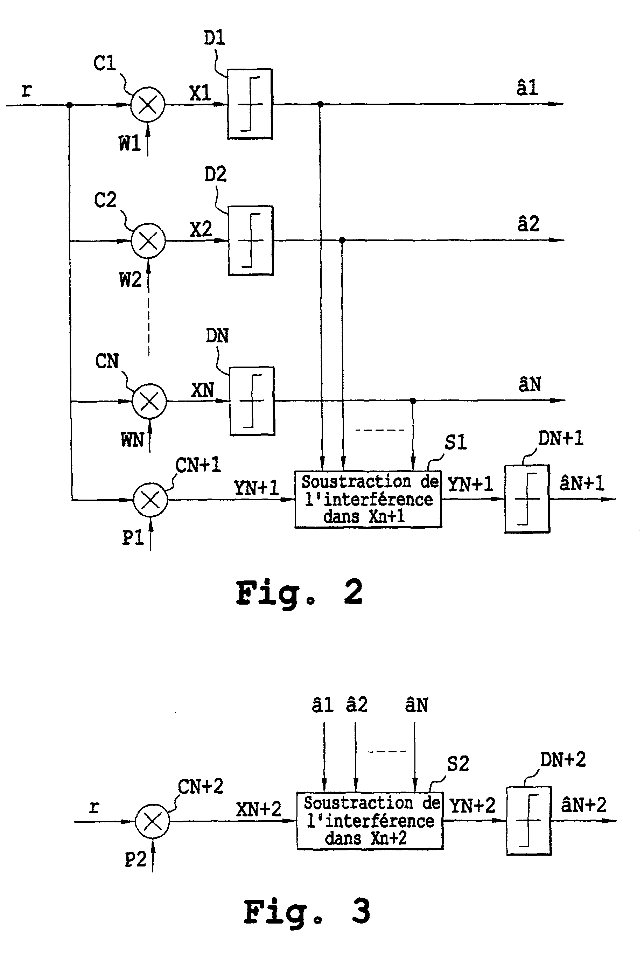

Pour la réception, on peut utiliser plusieurs techniques de détection. Une première technique de détection est montrée sur la figure 2. On y considère un système selon l'invention avec N+1 utilisateurs. N utilisateurs ont donc une séquence orthogonale de WALSH-HADAMARD et un utilisateur a une séquence PN. A la réception, le signal reçu r (l'indice temps n'est pas utilisé car la détection décrite ci-dessous n'utilise pas d'information des symboles précédents) est envoyé vers une batterie de N+1 corrélateurs C1 à CN+1. Ces corrélateurs effectuent une corrélation entre les bits du signal reçu et les séquences de bits $W_1$ à $W_N$ et P1 qui concernent les différents symboles. Ces corrélateurs produisent des signaux décodés (décorrélés) quantifiés. Dans un exemple, ils sont quantifiés sur une douzaine de bits.

Les N premiers utilisateurs n'ont pas à subir d'interférence mutuelles. La seule interférence pour ces utilisateurs est celle causée par l'ajout de signaux supplémentaires avec séquences d'étalement de type PN. Ici, ils ne subissent qu'une interférence 1/N seulement provenant du message N+1. Dans le cas présent, S/I = N. En conséquence, les signaux décorrélés en sortie des corrélateurs C1 à CN peuvent être envoyés vers des détecteurs à seuil D1 à DN sans une dégradation significative de leur rapport signal à bruit. Cette décorrélation et cette détection constituent une première étape.

Par contre, le signal du $(N+1)^{\text{ième}}$ utilisateur reçoit une interférence de puissance 1/N de chacun des N autres utilisateurs, ce qui signifie que le rapport S/I est égal à 1 pour cet utilisateur. On ne peut donc pas normalement détecter ce signal à l'aide d'un détecteur à seuil DN+1. Toutefois, comme des décisions préliminaires sont disponibles pour le premier ensemble d'utilisateurs (obtenues à la première étape), celles-ci peuvent être utilisées pour synthétiser et soustraire leur interférence sur le deuxième ensemble d'utilisateurs. Dans l'invention, dans une deuxième étape, de préférence, on soustrait l'interférence estimée des N utilisateurs. C'est ce qui apparaît sur la dernière branche de la figure 2 pour le $(N+1)^{\text{ième}}$ utilisateur.

Si on examine de plus près l'élimination de l'interférence du premier utilisateur dans le cas de la figure 2, l'interférence de celui-ci sur l'utilisateur N+1 est :

$$I_{1,N+1} = a_1 \sum_{i=1}^{N} (p_{1,i} \times w_{1,i})$$
$$= a_1 P_1^T W_1$$

où $a_1$ et la contribution apportée (de manière néfaste ici) par le symbole $a_{11}$ et où l'exposant T désigne « transposé ». Les séquences P1 et W1 étant connues du récepteur, l'interférence $I_{1,N+1}$ peut être synthétisée et soustraite, une fois qu'une décision sur la valeur de $a_{11}$ a été prise. Il en est de même pour l'interférence de chacun des N-1 autres utilisateurs. D'une manière générale, on peut écrire:

$$I_{n,N+1} = a_n \sum_{i=1}^{N} (p_{1,i} \times w_{n,i})$$
$$= a_n P_1^T W_n$$

pour l'interférence du n$^{ième}$ utilisateur (n = 1, 2,...., N) sur l'utilisateur N+1. Ainsi, l'étage de soustraction d'interférence S1 représenté figure 2 effectue l'opération

$$y_{N+1} = x_{N+1} - \sum_{n=1}^{N} \left( \hat{a}_n \, P_1^T \, W_n \right)$$

où â représente les estimations, les décisions prises pour les symboles a, et où la sommation représente la synthèse des interférences apportées par les N premiers symboles. A l'entrée du soustracteur S1 on applique un signal supplémentaire décodé quantifié résultant du décodage du signal reçu r par la séquence P1. A la sortie du soustracteur S1, on obtient un signal supplémentaire décodé quantifié soustrait. Ce dernier signal est détecté par un détecteur DN+1 du même type que les détecteurs D1 à DN. Si les décisions des N premiers symboles sont correctes, c'est-à-dire si â$_n$=a$_n$ pour n = 1, 2,..., N, l'interférence sera totalement annulée du signal de l'utilisateur N+1. Il s'agit bien d'une technique de détection par étapes, car la décision sur le signal de l'utilisateur N+1 est prise dans un deuxième temps, une fois que les décisions ont été effectuées en parallèle pour les symboles des utilisateurs 1 à N, et celles-ci sont utilisées pour synthétiser et soustraire l'interférence.

Les signaux avec séquences d'étalement de type PN subissent à la fois l'interférence des signaux avec séquences WH et leur interférence mutuelle. Donc l'interférence qu'ils subissent croit avec leur nombre. D'une manière générale, si le nombre M-N des signaux supplémentaires reste faible par rapport à N (par exemple inférieur à 10% de N), on peut prendre des décisions sur les symboles émis par les utilisateurs WH à partir des signaux décodés quantifiés avec une fiabilité relativement bonne. Plus précisément, avec M-N utilisateurs de séquences PN, on a S/I=N/(M-1) ce qui peut être très proche du rapport S/I du premier ensemble d'utilisateurs pour M proche de N.

Le schéma de la figure 2 se généralise ainsi aisément dans ce cas à N+2, puis à N+3, etc... utilisateurs, en ajoutant des branches en bas de cette figure 2. Par exemple, la branche de l'utilisateur N+2 sera de la forme illustrée par la figure 3. La boîte S2 de soustraction de l'interférence effectue dans ce cas l'opération :

$$y_{N+2} = x_{N+2} - \sum_{n=1}^{N} \left( \hat{a}_n \, P_2^T \, W_n \right)$$

Par ailleurs, les simulations montrent que même avec un taux d'erreurs de 10$^{-3}$ sur ces décisions, la soustraction d'interférence est quasi-parfaite, et après celle-ci les signaux des utilisateurs de séquences PN ne sont plus soumis qu'à leur interférence mutuelle. Celle-ci est du même ordre de grandeur que celle affectant le premier ensemble d'utilisateurs à l'étape 1.

Ces deux étapes donnent satisfaction si N est proche de M. Toutefois, comme on cherche à rendre ce nombre M-N le plus élevé possible, la fiabilité des décisions prises à ces deux premières étapes peut ne pas être suffisante et ces décisions peuvent ne pas être considérées comme des décisions finales. Par exemple, pour M-N = N/4, le rapport S/I pour les signaux des utilisateurs de séquences WH n'est que de 6 dB, ce qui donne une probabilité d'erreur de l'ordre de 10$^{-3}$. Dans certains cas, ce n'est pas suffisant. On procédera alors pour ces signaux à une deuxième technique de décodage et de détection.

Cette deuxième technique de décodage et de détection comporte des itérations. En effet, une deuxième itération des décisions est préférable pour obtenir une probabilité d'erreur suffisamment faible. Dans cette deuxième itération, à une première étape, des décisions préliminaires sur les signaux du second ensemble d'utilisateurs (ceux avec séquences PN) obtenues à la deuxième étape d'une première itération sont utilisées pour synthétiser l'interférence de ceux-ci sur les signaux du premier ensemble d'utilisateurs (ceux avec séquences WH). On les soustrait ensuite de la même façon que des soustractions ont été présentées figure 2 et figure 3.

Aussi, après avoir exécuté les deux étapes vues ci-dessus dans une première itération, dans une deuxième itération, on estime à nouveau les décisions sur a$_1$, a$_2$, ..., a$_N$, une fois qu'une décision estimée a été prise sur les symboles a$_{N+1}$ à a$_M$, en vue d'accroître la fiabilité des décisions et réduire le taux d'erreurs. Selon l'invention, une fois que les a$_{N+1}$ à a$_M$ ont été estimés, on peut soustraire leur interférence a$_{N+1}$ P$_1^T$ W$_n$, a$_{N+2}$ P$_2^T$ W$_n$, ... a$_M$ P$_{M-N}^T$ W$_n$ sur le n$^{ième}$ (n = 1, 2, ... , N) utilisateur avant d'entrer le signal décodé quantifié de celui-ci dans le détecteur à seuil. La technique de décodage devient alors itérative.

Après de telles soustractions, de nouvelles décisions sont prises sur les symboles émis par les utilisateurs de séquences WH. A cette étape, les décisions étant prises en présence d'une interférence quasiment nulle, la probabilité d'erreur est extrêmement faible.

Dans une deuxième étape suivante de cette deuxième itération, les décisions de la première étape de la deuxième (ou de la première) itération, ainsi que les décisions de la deuxième étape de la première itération, sont utilisées pour soustraire toute l'interférence dans les signaux des utilisateurs avec séquences PN. Après cette opération de soustraction, l'interférence résiduelle est quasiment nulle et la probabilité d'erreur est faible également pour cet ensemble d'utilisateurs qui peuvent être facilement décodés avec les séquences PN. Pour les M-N signaux avec séquences PN, on procède à la détection après soustraction de l'interférence des N signaux avec séquence WH et de l'interférence des M-N-1 signaux de type PN.

En principe, il pourrait encore être possible d'améliorer la qualité des décisions par des itérations supplémentaires. Mais l'analyse théorique et les simulations montrent que le gain est faible au-delà de la seconde itération, et qu'on peut parfaitement se contenter de faire seulement deux itérations.

Normalement pour un message codé avec une séquence orthogonale, une même séquence orthogonale est utilisée pour tous les symboles successifs du message. Avec l'invention, il est possible d'organiser pour des symboles de rang R à R+1 une permutation de codage entre des messages codés par des séquences O et des séquences PN initiales. De ce fait, une séquence aléatoire se définit comme une séquence dans. laquelle les bits utilisés ne se reproduisent tels quels qu'avec une période de séquence longue, par exemple plus grande que N au moins.

Plutôt que de pratiquer les soustractions sur les signaux de chip décodé, il pourrait être envisageable de recoder les estimations et de déduire le résultat de leur recodage du signal reçu. Les traitements à exécuter seraient cependant inutilement important dans ce cas.

## Revendications

**1.** Procédé d'accès multiple de type CDMA, pour transmettre plusieurs messages contenant chacun une suite de symboles dans lequel

- on code chaque symbole à transmettre par une séquence de N bits pour obtenir pour chaque symbole une séquence de N contributions dites chips,
- on combine les chips des différents messages pour obtenir un signal transmis,
- on reçoit le signal transmis,

   **caractérisé en ce que**

- si N symboles au plus sont transmis simultanément, on choisit pour les séquences de bits utilisées des séquences orthogonales, et
- si M symboles sont transmis simultanément avec M plus grand que N, on choisit pour N symboles N séquences orthogonales de N bits, et pour M-N symboles supplémentaires restants des séquences de N bits aléatoires ou pseudo-aléatoires,
- une séquence de N bits étant aléatoire ou pseudo-aléatoire si pour des symboles suivant à transmettre d'un même message les séquences de N bits ne se reproduisent qu'avec une période plus grande que N.

**2.** Procédé selon la revendication 1, **caractérisé en ce que**, suite à la réception du signal transmis, on exécute les étapes suivantes

- a) on décode le signal transmis reçu par les N séquences orthogonales et on obtient N signaux décodés quantifiés (X1), on détecte les N signaux décodés quantifiés et on obtient N estimations ($\hat{a}_1$) de symboles des N messages,
- b) on décode le signal transmis reçu par les M-N séquences aléatoires ou pseudo-aléatoires supplémentaires et on obtient M-N signaux supplémentaires décodés quantifiés (XN+1, XN+2 ...),
- c) on soustrait de chacun des M-N signaux supplémentaires décodés quantifiés une interférence synthétisée à partir des N estimations des symboles des N messages, on détecte les résultats (YN+1) de ces soustractions et on obtient M-N estimations ($\hat{a}_{N+1}$) supplémentaires de symboles des M-N messages.

**3.** Procédé selon la revendication 2, **caractérisé en ce que**,

- f) on soustrait de chacun des N signaux décodés quantifiés (X1) une interférence synthétisée à partir des M-N estimations ($\hat{a}_{N+1}$) supplémentaires de symboles des M-N messages et on détecte les N signaux décodés quantifiés soustraits résultants et on obtient N deuxièmes estimations ($\hat{a}_1$) des symboles des N messages,
- e) on réitère l'étape c) en remplaçant les N estimations des symboles des N messages par les N deuxièmes estimations des symboles des N messages.

**4.** Procédé selon la revendication 3, **caractérisé en ce que**

- dans l'étape e) on soustrait en plus de chacun des M-N signaux supplémentaires décodés quantifiés M-N-1 interférences mutuelles synthétisées à partir des M-N-1 estimations des symboles des M-N-1 autres messages et on détecte les résultats de ces soustractions.

**5.** Procédé selon l'une des revendications 1 à 4, **caractérisé en ce que**

- d'un symbole de rang R des M messages à un symbole de rang R+1 de ces M messages on change le codage de message codés par des séquences orthogonales en un codage par des séquences aléatoires ou pseudo-aléatoires.

## Claims

**1.** A CDMA method for transmitting a plurality of messages each containing a series of symbols, in which method:

- each symbol to be transmitted is encoded using a sequence of N bits to obtain for each symbol a sequence of N contributions known as chips,
- the chips of the various messages are combined to obtain a transmitted signal,
- the transmitted signal is received,

  **characterized in that**:

- if N symbols at most are transmitted simultaneously, orthogonal sequences are chosen for the sequences of bits used,
- if M symbols are transmitted simultaneously, where M is greater than N, N orthogonal sequences of N bits are chosen for N symbols and random or pseudo-random sequences of N bits are chosen for the M-N remaining symbols,
- a sequence of N bits being random or pseudo-random if for subsequent symbols of the same message to be transmitted the sequences of N bits are reproduced only with a period greater than N.

2. A method according to claim 1, **characterized in that** following reception of the transmitted signals, the following steps are executed:

   - a) the transmitted signal received is decoded using the N orthogonal sequences and N quantified decoded signals (X1) are obtained, the N quantified decoded signals are detected and N estimates ($\hat{a}_1$) of the symbols of the N messages are obtained,
   - b) the transmitted signal received is decoded using the M-N random or pseudo-random additional sequences and M-N quantified decoded additional signals (XN+1, XN+2, ...) are obtained,
   - c) interference synthesized from the N estimates of the symbols of the N messages is subtracted from each of the M-N quantified decoded additional signals, the results (YN+1) of the subtractions are detected and M-N additional estimates ($\hat{a}_{N+1}$) of the symbols of the M-N messages are obtained.

3. A method according to claim 2, **characterized in that**:

   - f) interference synthesized from the M-N additional estimates ($\hat{a}_{N+1}$) of the symbols of the M-N messages are subtracted from each of the N quantified decoded signals (X1) and the N resulting subtracted quantified decoded signals are detected and N second estimates ($\hat{a}_1$) of the symbols of the N messages are obtained,

   - e) step c) is reiterated, replacing the N estimates of the symbols of the N messages by the N second estimates of the symbols of the N messages.

4. A method according to claim 3, **characterized in that**, in step e), M-N-1 mutual interferences synthesized from the M-N-1 estimates of the symbols of the M-N-1 other messages are subtracted from each of the M-N quantified decoded additional signals and the results of such subtractions are detected.

5. A method according to any one of claims 1 to 4, **characterized in that**, from the R$^{th}$ symbol of the M messages to the (R+1)$^{th}$ symbol of the M messages, encoding of the messages using orthogonal sequences is replaced by encoding using random or pseudo-random sequences.

**Patentansprüche**

1. Vielfachzugriffsverfahren vom CDMA-Typ zum Übertragen mehrerer jeweils eine Folge von Symbolen enthaltender Meldungen, bei dem

   - jedes zu übertragende Symbol mit einer Folge von N Bits codiert wird, um für jedes Symbol eine Folge von N als Chips bezeichneten Beiträgen zu erhalten,
   - die Chips der verschiedenen Meldungen kombiniert werden, um ein Sendesignal zu erhalten,
   - das Sendesignal empfangen wird,

     **dadurch gekennzeichnet, dass**

   - wenn maximal N Symbole gleichzeitig übertragen werden, für die verwendeten Bitfolgen orthogonale Folgen gewählt werden, und
   - wenn M Symbole gleichzeitig übertragen werden, wobei M größer als N ist, für N Symbole N orthogonale Folgen von N Bits gewählt werden und für M-N übrige zusätzliche Symbole Folgen mit N zufälligen oder pseudozufälligen Bits gewählt werden,
   - wobei eine Folge von N Bit zufällig oder pseudozufällig ist, wenn für aufeinanderfolgende zu übertragende Symbole einer gleichen Meldung die Folgen von N Bits sich nur mit einer Periode größer als N wiederholen.

2. Verfahren nach Anspruch 1, **dadurch gekennzeichnet, dass** nach Empfang des übertragenen Signals die folgenden Schritte ausgeführt werden

   - a) Decodieren des empfangenen übertragenen Signals mit den N orthogonalen Folgen und Erhalten von N quantisierten decodierten Signalen (X1), Erfassen der N quantisierten decodierten Signale und Erhalten von N Abschätzungen ($\hat{a}_1$) von Symbolen der N Meldungen

- b) Decodieren des empfangenen übertragenen Signals mit den M-N zufälligen oder pseudozufälligen zusätzlichen Folgen und Erhalten von M-N quantisierten decodierten zusätzlichen Signalen (XN+1, XN+2 ...),

- c) Subtrahieren einer Störung von jedem der M-N quantisierten zusätzlichen Signale, die ausgehend von den N Abschätzungen der Symbole der N Meldungen synthetisiert wird, Erfassen der Ergebnisse (YN+1) dieser Subtraktionen und Gewinnen von M-N zusätzlichen Abschätzungen ($\hat{a}_{N+1}$) von Symbolen der M-N Meldungen.

3. Verfahren nach Anspruch 2, **dadurch gekennzeichnet, dass**

    - f) von jedem der N quantisierten decodierten Signale (X1) eine Störung subtrahiert wird, die anhand der M-N zusätzlichen Abschätzungen ($\hat{a}_{N+1}$) von Symbolen der M-N Meldungen synthetisiert wird und Erfassen der N resultierenden subtrahierten quantisierten decodierten Signale und Gewinnen von *N* zweiten Abschätzungen ($\hat{a}_1$) der Symbole der N Meldungen,

    - e) Wiederholen des Schritts c), wobei die N Abschätzungen der Symbole der N Meldungen durch die N zweiten Abschätzungen der Symbole der N Meldungen ersetzt werden.

4. Verfahren nach Anspruch 3, **dadurch gekennzeichnet, dass**

    - in Schritt e) zusätzlich von jedem der M-N quantisierten decodierten zusätzlichen Signale M-N-1 gegenseitige Störungen subtrahiert werden, die anhand der M-N-1 Abschätzungen von Symbolen der M-N-1 anderen Meldungen erhalten werden, und Erfassen der Ergebnisse dieser Subtraktionen.

5. Verfahren nach einem der Ansprüche 1 bis 4, **dadurch gekennzeichnet, dass**

    - von einem Symbol vom Rang R der M Meldungen zu einem Symbol vom Rang R+1 dieser M Meldungen die Codierung der durch orthogonale Folgen codierten Meldungen durch eine Codierung durch zufällige oder pseudozufällige Folgen ersetzt wird.

Fig. 1

**Fig. 2**

**Fig. 3**